# EUROPEAN PATENT APPLICATION

(11) **EP 1 376 061 A1**
(43) Date of publication of application: **02.01.2004**
(21) Application number: 02013647.9
(22) Date of filing: 19.06.2002
(51) Int. Cl.: G01C 21/34

(54) **A method for calculating a motor vehicle navigation route to a destination and a system and motor vehicle applying such method**

(71) Applicant: SIEMENS AKTIENGESELLSCHAFT, 80333 München (DE)
(72) Inventor: Hendriks, Antonius Johannes, 5509 NR Veldhoven (NL); Verriet, Jacques, 5627 DZ Eindhoven (NL)

(57) **Abstract**

A method for in a motor vehicle (30) calculating a navigation route towards a destination (E) operates by sequentially presenting navigation indications to a vehicle user as being based on an actual position (A) of the vehicle, and on an actually calculated route.

In particular, the method detects and evaluates a feasibility metric of the actually calculated route, and in case of an insufficient feasibility, finds a predicted vehicle position (D1, D2) at a predetermined future instant in time. Next, the method recalculates the navigation route as between the predicted vehicle position (D1, D2) and the destination (E). However, in case of sufficient feasibility, all of the actually calculated route is maintained.

## Description

The invention relates to a method for in a motor vehicle calculating a navigation route towards a destination, whilst sequentially presenting navigation indications to a vehicle user as being based on an actual position of said vehicle, and on an actually calculated route. Such methods have become in general use. However for several reasons, during actual travel it may become necessary to recalculate the route. Such recalculation may then lead to a ***different*** overall route, hat would cause the navigation system to give closely spaced user indications that could be mutually conflicting, such as a right turn indication at a T-junction immediately followed by a left turn indication at the same T-junction. The inventors have recognized that it were better to maintain the first part of the route that must be followed unchanged with respect to the route already calculated.

In consequence, amongst other things, it is an object of the present invention to improve the navigation method as recited by maintaining as much as possible the initial part of the already calculated route.

Now therefore, according to one of its aspects the invention is characterized by the following steps:
- detecting and evaluating a feasibility metric of said actually calculated route,
- in case of an insufficient feasibility metric value, finding a predicted vehicle position at a predetermined future instant in time;
- and recalculating said navigation route as between said predicted vehicle position and said destination,
- but in case of a sufficient feasibility metric value, maintaining all of said actually calculated route.

Preferably, said feasibility metric is determined on the basis of data emanating from one or more of a traffic condition, a road condition, a quality metric of the calculated route itself, and a user signalization.

According to another aspect of the invention, said predicted position is determined on the basis of said actual position and an actual or predicted speed of said vehicle.

The invention may preferably be characterized in that the finding of said predicted position is co-determined by a second feasibility metric of the recalculated navigation route.

The invention also relates to a system being arranged for implementing a method as claimed in Claim 1 and to a motor vehicle comprising such system.

These and further aspects and advantages of the invention will be discussed more in detail hereinafter with reference to the disclosure of preferred embodiments, and in particular with reference to the appended Figures that show:
- Figure 1,: a route as calculated originally;
- Figure 2,: an alternative route as recalculated from an actual vehicle position;
- Figure 3,: an alternative route as recalculated from a predicted vehicle position;
- Figure 4,: a flow chart of a method according to the present invention;
- Figure 5,: a motor vehicle schematic according to the present invention.

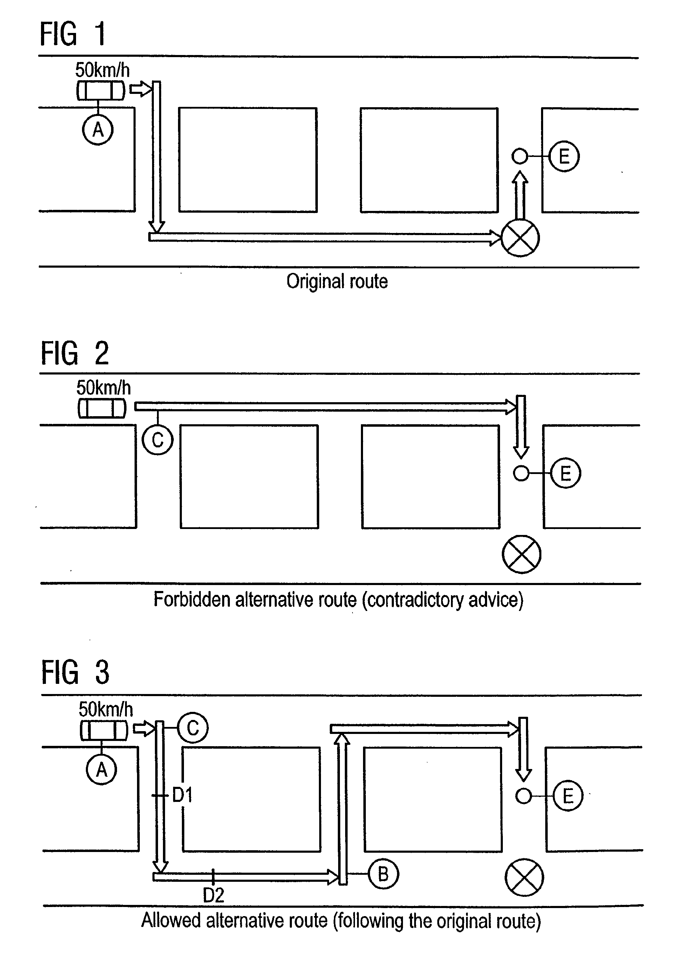

Figure 1 illustrates a route as calculated originally. The motor vehicle A shown at top left should travel to the intended destination E that is located at the black dot far right in the Figure. For clarity, it has been assumed that using the lower one of the two parallel roads from left to right would be preferable. Now, for one of the reasons to be discussed hereinafter, the using of the T-junction at lower right in the Figure may cause a ***feasibility metric*** of the calculated route to become insufficient. This would require the vehicle to approach the destination E from above in the Figure, instead of from below.

Figure 2 illustrates an alternative route as recalculated from the actual vehicle position E that had been indicated in Figure 1. As shown, the recalculated route now takes the upper one of the two parallel roads, and thereby avoids using the T junction at lower right in the Figure. In fact, the avoided junction could have a traffic problem, such as a traffic jam that had just occurred there. The feasibility metric could relate to the predicted overall travelling time that could thereby have risen to a (potentially) unacceptable value. Other feasibility metrics could be based on the length of the travelling route, the presence of a gasoline station or a restaurant, that should be present according to the vehicle's need or the user person's wish, respectively, or various other features. A particular subclass of the feasibility metric is the quality metric of the solution as found by the system. The quality may have been determined by aspects like the superiority of the route as calculated versus the known second best solution, the known prone-ness of the route to traffic jams as based on statistical data, and the like.

Now, the cause of the recalculating could be a discrete aspect of the old route, such as a traffic jam developing as shown in Figure 1. Another cause could be gradual, such as the measuring of the vehicle's actual speed that could be due to local heavy traffic that would not yet render the actual travelling totally unfeasible. Other gradual developments could also be relevant, such as high winds on a coast road, heavy rain on an exposed stretch, and the like. The feasibility metric could be recalculated from time to time, and when comparison with an original value shows a sufficient amount of deterioration, such as 10% or more, the calculating of a new route could be undertaken. Of course, always the feasibility of only the route part to be taken in future is considered.

Now, the recalculation could be initiated either by the system itself, or by the user person that for some reason were not satisfied by the quality or feasibility metric of the route. However, from the Figure it would be clear that the vehicle should now more or less immediately deviate from the originally planned route, and "go ahead" at T-junction C instead. This latter indication to the user person could however contradict the navigation indication "turn right", that was given either explicitly or implicitly immediately earlier as based on the "old" route calculation. Such contradiction could prove extremely confusing to the user person, and possibly even very dangerous.

Figure 3 illustrates an alternative route as recalculated from a predicted position of the vehicle. Two examples D1, D2 of the predicted position have been indicated in the Figure. Generally, they will lie on the originally calculated route somewhere ahead from the actual position A and between positions C and B. The ***distance*** between the actual position A and the predicted position may depend on the actual and/or predicted vehicle speed, so that the ***time*** until the first change between the old route and the amended route will ***not*** lie below a certain value, such as 20 seconds or the like. Another aspect could relate to the character of the road (a motorway could raise the lower bound), traffic conditions, such as being scarce or heavy (a longer value in heavy traffic), a user person reaction time that may have been prespecified by the user person, and possibly other parameters.

The distance or travelling time between point A and the predicted position D1, D2 could depend on the feasibility metric of the recalculated route after calculation. For example, if the recalculated route is only slightly better than the "old" route when starting recalculation at D1, the first recalculation may be ignored, and a second one be started as from predicted position D2 that is further away from the present position A. This feature introduces a "conservative" manner of recalculation. Of course, the other way round would be possible as well, thereby bringing the predicted position closer to the actual position. This could be termed a "radical" manner of calculating.

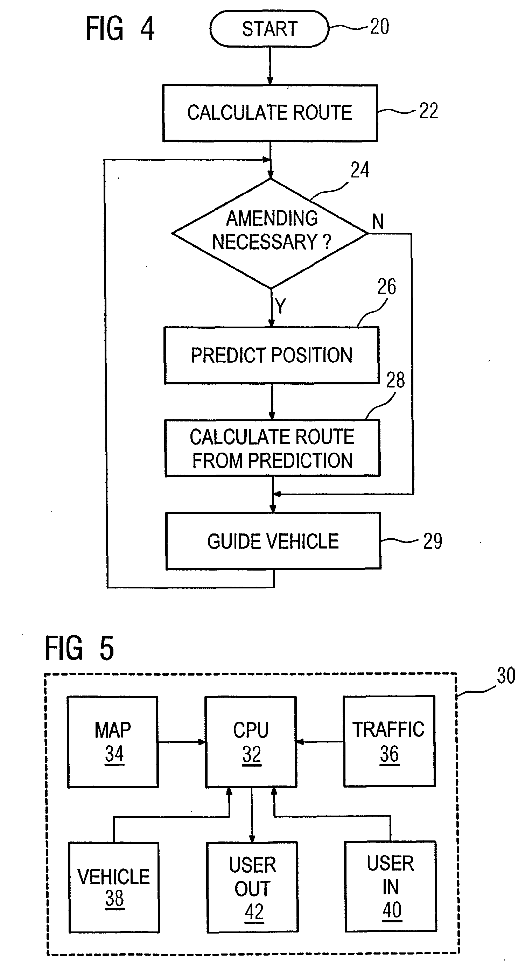

Figure 4 illustrates a flow chart of a method according to the present invention. In block 20, the operation is started, and the necessary hardware and software facilities are assigned. In block 22, the route is calculated as based on the actual vehicle position, and on the destination such as having been specified by the user person. After finalizing this calculation, and possibly, after the user has commenced to follow the various driving indications presented by the navigation system, in block 24 the system detects whether amending of the planned route becomes necessary, as based on a change in the feasibility metric as discussed earlier. If not, the system proceeds to block 29 and goes on with guiding the user along the planned route, and in accordance with the various actual vehicle positions that are being detected and/or calculated.

If amending becomes necessary, however, the system goes to block 26 and finds a predicted position. Subsequently, in block 28, the route is calculated as from the predicted position towards the destination. Thereafter, the system proceeeds again to block 29 for effecting further guidance.

Figure 5 illustrates a schematic of a motor vehicle (30) according to the present invention. For brevity, the various systems and subsystems of the motor vehicle 30 have only been shown as blocks. The processing is generally effected in CPU 32, that accesses sources of map information 34, traffic information 36, vehicle information 38 and user input information 40. Part of these sources will be static, but part thereof may be dynamic, such as in particular pertaining to user input signals, the actual vehicle position, and varying traffic informations that may be provided as broadcast codes. After calculating the relevant route, user travelling indications may be outputted as user output information in the form of visual display, speech and other manners in block 42.

The advantages of the invention are various. In the first place, the user person will not receive respective mutually contradictory advices at or near the same junction or other location where a user operation should be effected. Hence, such confusing situations as where the user will be asked to execute respective different turns at a single junction are avoided. Furthermore, the probability for an interval ***without*** guidance will be diminished. Such could in fact occur as follows. When the user receives the new advice that supersedes the old advice, immediate reaction may prove impossible, such as through having been driving in the wrong lane. After then following the old advice, the vehicle would have driven off the newly corrected route, which would necessitate to ***again*** calculate the best route. However, this could require some more time, during which the user would receive no advice at all.

The present invention has been disclosed here above with reference to preferred embodiments. However, persons skilled in the relevant art will recognize various changes and amendments. Unless such changes and amendments would extend outside the scope of the Claims hereafter appended, they should be considered as being part of the present invention. The drawings and disclosure should in consequence be considered illustrative rather than limiting.

## Claims

1. A method for in a motor vehicle (30) calculating a navigation route towards a destination (E), whilst sequentially presenting navigation indications to a vehicle user as being based on an actual position (A) of said vehicle, and on an actually calculated route, said method being **characterized by** the following steps:
- detecting and evaluating a feasibility metric of said actually calculated route,
- in case of an insufficient feasibility metric value, finding a predicted vehicle position (D1, D2) at a predetermined future instant in time;
- and recalculating said navigation route as between said predicted vehicle position (D1, D2) and said destination (E),
but in case of a sufficient feasibility metric value, maintaining all of said actually calculated route.

2. A method as claimed in Claim 1, being **characterized in that** said feasibility metric is determined on the basis of data emanating from one or more of a traffic condition, a road condition, a quality metric of the calculated route itself, and a user signalization.

3. A method as claimed in Claim 1, being **characterized in that** said predicted position (D1, D2) is determined on the basis of said actual position (A) and an actual or predicted speed of said vehicle.

4. A method as claimed in Claim 1, being **characterized in that** the finding of said predicted position is co-determined by a second feasibility metric of the recalculated navigation route.

5. A system being arranged for implementing a method as claimed in Claim 1 and comprising calculating means (32) for calculating a navigation route towards a destination (E) and for feeding presentation means (42) for sequentially presenting (29) navigation indications to a vehicle user, as being based on an actual position (A) of said vehicle and on an actually calculated route, said system being **characterized by** comprising:
- evaluating means (24) for detecting and evaluating a feasibility metric of said actually calculated route, and in case of an insufficient feasibility metric value, finding (26) a predicted vehicle position (D1, D2) at a predetermined future instant in time;
- and recalculating means for recalculating (28) said navigation route as between said predicted vehicle position (D1, D2) and said destination (E),
- but in case of a sufficient feasibility metric value, maintaining all of said actually calculated route.

6. A motor vehicle comprising a system as claimed in Claim 5 and being arranged for implementing a method as claimed in Claim 1.
